# EUROPEAN PATENT APPLICATION

(11) **EP 1 596 388 A1**
(43) Date of publication of application: **16.11.2005**
(21) Application number: 04704334.4
(22) Date of filing: 22.01.2004
(51) Int. Cl.: G11B 20/10, G11B 20/12, G11B 20/14, H04L 25/49, H03M 7/14

(54) **DATA RECORDING METHOD AND DEVICE, DATA RECORDING MEDIUM, DATA REPRODUCTION METHOD AND DEVICE, DATA TRANSMISSION METHOD AND DEVICE, AND DATA RECEPTION METHOD AND DEVICE**

(30) Priority: 19.02.2003 JP 2003040914
(71) Applicant: SONY CORPORATION, Tokyo 141-0001 (JP)
(72) Inventor: SAKO, Yoichiro, SONY CORPORATION, Shinagawa-ku, Tokyo 141-0001 (JP)
(74) Representative: Müller - Hoffmann & Partner
(86) International application number: PCT/JP2004/000541
(87) International publication number: WO 2004/075192

(57) **Abstract**

Main data and subdata are subjected to an error correction encoding process in each of ECC encoders 2a and 2b. The main data is modulated by an 8-16 modulating unit 3. In a sync signal adding unit 7, selected ones of a plurality of patterns are added as sync signals on the basis of conversion tables stored in a table memory 4. In a predetermined interval on an optical disc, a switch 13 is turned on and selection of the patterns of the sync signals is controlled in accordance with a value of the subdata, so that the subdata is recorded. A recording signal of an EFM Plus frame format is generated from the sync signal adding unit 7. The recording signal is supplied to an optical pickup 9 through a recording circuit 8. The main data and subdata are recorded onto an optical disc 10.

## Description

### Technical Field

The invention relates to data recording method and apparatus, a data recording medium, data reproducing method and apparatus, data transmitting method and apparatus, and data receiving method and apparatus which are applied to recording/reproduction and transmission/reception of subdata serving as information regarding copy protection or security of main data or as personal information besides the main data.

### Background Art

Optical discs such as CD (Compact Disc), CD-ROM (Compact Disc Read Only Memory), and the like have been widespread as recording media to store data since they can be easily handled and manufacturing costs are relatively low. In recent years, a CD-R (Compact Disc Recordable) disc in which data can be additionally recorded and a CD-RW (Compact Disc ReWritable) disc in which data can be re-recorded have been put into practical use and data can be easily recorded onto such an optical disc. Therefore, the optical discs such as CD-DA disc, CD-ROM disc, CD-R disc, CD-RW disc, and the like which conform with the CD standard have become the core of data recording media. Further, in recent years, there has been used a method whereby audio data is compressed by MP3 (MPEG1 Audio Layer-3) or ATRAC (Adaptive TRansform Acoustic Coding) 3 and recorded onto the CD-ROM disc, CD-R disc, CD-RW disc, or the like.

However, since appearance of the CD-R disc and CD-RW (Compact Disc ReWritable) discmeans that data recorded on the CD can be easily copied, a problem of protection of copyrights occurs. Thus, when contents data is recorded onto the compact disc (CD), it is necessary to take a countermeasure to protect the contents data. There is also a similar problem in a DVD (Digital Versatile Disc) in which the copy protection called CSS (Content Scrambling System) has been broken.

As a method of the copy protection, there is a method whereby the contents data to be recorded is encrypted and only an authorized reproducing apparatus is enabled to obtain key information for decrypting the encryption. A method of embedding the key information into the recording data has been disclosed in JP-A-2002-367282.

According to JP-A-2002-367282, main data is modulated by 8-16 modulation (called EFM Plus) used in the DVD. In the 8-16 modulation, a data symbol of 8 bits is converted into a code word of 16 channel bits. As code conversion tables for this purpose, four kinds of tables are prepared and one of them is selected. The code conversion table is selected so that a run length satisfies the conditions of (RLL (2,10)) and a DSV (Digital Sum Variation) is converged to a value near 0.

According to JP-A-2002-367282, when the main data is 8-16 modulated in a predetermined data interval, additional data such as secret data or the like is recorded by selecting the conversion table in accordance with the additional data instead of following the foregoing selecting rule.

According to the method disclosed in JP-A-2002-367282, the selecting method of the conversion table upon modulation of the main data or the like is controlled in accordance with the additional data. Therefore, there is such a fear that the DSV of the main data or the like cannot be optimized in a recording interval of the additional data and the main data or the like cannot be correctly reproduced by the reproducing apparatus. Consequently, the more difficult the correct reproduction of the main data or the like becomes, the more it is necessary to see that the DSV is not diverged, and there occurs such a problem that a freedom degree upon the recording of the additional data is restricted.

It is, therefore, an object of the invention to provide data recording method and apparatus , a data recording medium, data reproducing method and apparatus, data transmitting method and apparatus, and data receiving method and apparatus, in which subdata is recorded by controlling selection of patterns of sync signals instead of controlling main data and the foregoing problems do not occur.

### Disclosure of Invention

To solve the above problems, according to the invention of Claim 1, there is provided a data recording method comprising the steps of : selecting predetermined sync signal patterns from patterns of a plurality of sync signals on the basis of contents of subdata other than main data; and inserting the selected sync signal patterns at every predetermined interval of the main data and recording. According to the invention of Claim 8, there is provided a data recording apparatus comprising: storing means for storing sync signals of a plurality of patterns; recording means for recording data; and control means for allowing predetermined sync signal patterns to be selected from the patterns of the plurality of sync signals stored in the storing means on the basis of contents of additional data added to the recording data and allowing the selected sync signal patterns to be inserted at every predetermined interval of the recording data and recorded.

According to the invention of Claim 9, there is provided a data recording medium on which predetermined sync signal patterns among patterns of a plurality of sync signals have been inserted at every predetermined interval of recording data on the basis of contents of additional data added to the recording data and have been recorded.

According to the invention of Claim 17, there is provided a data reproducing method comprising the steps of: reproducing a data recording medium on which predetermined sync signal patterns among patterns of a plurality of sync signals have been inserted at every predetermined interval of recording data on the basis of contents of additional data added to the recording data and have been recorded; accessing the predetermined interval; detecting the sync signal in the predetermined interval; and identifying the pattern of the detected sync signal, thereby allowing the additional data to be reproduced. According to the invention of Claim 19, there is provided a data reproducing apparatus comprising: reproducing means for reproducing a data recording medium on which predetermined sync signal patterns among patterns of a plurality of sync signals have been inserted at every predetermined interval of recording data on the basis of contents of additional data added to the recording data and have been recorded; and control means for allowing the reproducing means to access the predetermined interval, detecting the sync signal in the predetermined interval, and identifying the pattern of the detected sync signal, thereby allowing the additional data to be reproduced.

According to the invention of Claim 21, there is provided a data transmitting method comprising the steps of: selecting predetermined sync signal patterns from patterns of a plurality of sync signals on the basis of contents of additional data added to transmission data; and inserting the selected sync signal patterns at every predetermined interval of recording data and transmitting. According to the invention of Claim 22, there is provided a data transmitting apparatus comprising: transmitting means for inserting sync signals at every predetermined interval of transmission data and transmitting; and control means for allowing predetermined sync signal patterns to be selected from patterns of a plurality of sync signals on the basis of contents of additional data added to the data to be transmitted and allowing the selected sync signal patterns to be transmitted by the transmitting means.

According to the invention of Claim 23, there is provided a data receiving method comprising the steps of: receiving data in which sync signal patterns are arranged at every predetermined interval of transmission data; detecting the pattern of the sync signal from the received data; and forming additional data of the transmission data on the basis of the detected sync signal. According to the invention of Claim 24, there is provided a data receiving apparatus comprising: receiving means for receiving data in which sync signal patterns are arranged at every predetermined interval of the data; and control means for detecting the pattern of the sync signal from the received data and allowing additional data of the data received by the receiving means to be formed on the basis of the detected sync signal.

According to the invention, the subdata other than the main data can be recorded/reproduced (or transmitted/received) without exercising any influence on a construction and signal processes of an ordinary reproducing system. Therefore, the data recording medium to which the invention is applied can be reproduced by the existing reproducing apparatus. Unlike the method of controlling the selection of the conversion table for the modulation of the main data or the like, according to the invention, since no influence is exercised on the modulation of the main data, there is such an advantage that a degree of freedom at the time of realizing the recording of the subdata is higher.

### Brief Description of Drawings

Fig. 1 is a block diagram showing a construction of a recording apparatus according to an embodiment of the invention.
Fig. 2 is a block diagram showing an example of a construction of a mastering apparatus to which the invention can be applied.
Fig. 3 is a block diagram showing a construction of a reproducing apparatus according to the embodiment of the invention.
Fig. 4 is a schematic diagram showing a sector construction in the embodiment of the invention.
Fig. 5 is a schematic diagram for explaining kinds and patterns of frame sync signals in the embodiment of the invention.
Fig. 6 is a schematic diagram for explaining a main table of conversion tables which are used for 8-16 modulation.
Fig. 7 is a schematic diagram for explaining an auxiliary table of the conversion tables which are used for the 8-16 modulation.

### Best Mode for Carrying Out the Invention

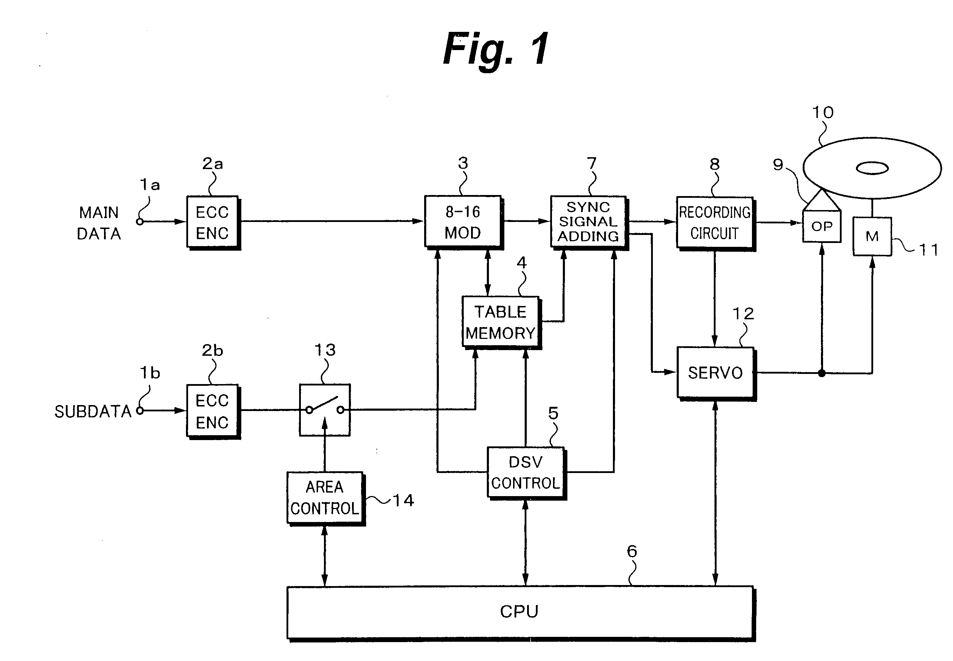

An embodiment of a recording apparatus according to the invention will be described herein below with reference to Fig. 1. Main data such as PCM audio data or the like to be recorded is supplied from an input terminal 1a to an ECC (Error Correcting Code) encoder 2a and subjected to an error correction encoding process for adding parity data for error correction or the like and a scrambling process. The error correction encoding process and scrambling process are executed to subdata from an input terminal 1b by an ECC encoder 2b.

A PCM audio signal, a digital video signal, document data, data of game software, data of application software, or the like can be given as main data. Ordinarily, the main data has been encrypted since copyright protection is necessary. Information regarding copy protection or security of the main data, for example, key information for encryption can be given as subdata. Since there is a problem on the security if the key information is recorded as it is, it is encrypted by adding random numbers or by block encryption of DES (Data Encryption Standard) or the like. Further, the key data for encryption can be also formed as a hash value of the key data and the subdata which is unique to an optical disc.

The main data from the error correcting encoder 2a is supplied to an 8-16 modulating unit 3. In the 8-16 modulation, a data symbol of 8 bits is converted into a code word of 16 channel bits. Conversion tables for this conversion have been stored in a table memory 4. An output of the 8-16 modulating unit 3 is supplied to a sync signal adding unit 7 and a frame sync signal is added thereto. A plurality of patterns are prepared as frame sync signals. Conversion tables for the patterns have been stored in the table memory 4.

The 8-16 modulating unit 3, table memory 4, and sync signal adding unit 7 are controlled by a DSV control unit 5. The DSV control unit 5 controls selection of the conversion table in the 8-16 modulating unit 3. That is, the selection of the conversion table of the main data is controlled so that the data after the modulation has a run length (RLL(2,10)) and the DSV is converged to a value near 0. Also with respect to the frame sync signals, the pattern is selected so that the DSV is converged to a value near 0. The DSV here denotes an accumulated DSV. Further, a kind and a status of the conversion table used for the modulation at present are held in the 8-16 modulating unit 3 and information held in order to select the next conversion table is used. The present status and the next status are also instructed to the sync signal adding unit 7 and the selection of the pattern of the frame sync signal is controlled.

The DSV control unit 5 is controlled by a system controller 6 constructed by a microcomputer. The system controller 6 controls the whole recording apparatus. In a predetermined interval on an optical disc, the selection of the pattern of the sync signal is controlled in accordance with the subdata in place of the control of the DSV, so that the subdata is recorded. This predetermined interval is instructed to the DSV control unit 5 from the system controller 6.

As mentioned above, the contents which is recorded on the disc is encrypted and the information necessary to form the encryption key information is recorded in the predetermined interval. Identification information peculiar to the disc can be also recorded in the predetermined interval. Further, a fact that the disc is an original disc can be also shown by the subdata recorded in the predetermined interval. Personal information can be also recorded as subdata.

The error correction encoded subdata from the ECC encoder 2b is supplied to the table memory 4 through a switch 13. If necessary, the subdata transmitted through the switch 13 can be also supplied to the sync signal adding unit 7. The switch 13 is turned on in the predetermined interval on the optical disc by an area control unit 14 and is turned off in the other interval. The area control unit 14 is controlled by the system controller 6. When the switch 13 is turned on, the subdata is supplied to the table memory 4 and the selection of the pattern of the frame sync signal is controlled in accordance with a value "0" or "1" of the subdata.

In the predetermined interval, the pattern of the sync signal is selected in accordance with the subdata. In the interval other than the predetermined interval, the pattern of the sync signal is selected so as to converge the DSV. The main data is modulated in a manner similar to the existing 8-16 modulation. A recording signal of an EFM Plus frame format is generated from the sync signal adding unit 7. The recording signal is supplied to an optical pickup 9 through a recording circuit 8. The data is recorded onto a recordable optical disc 10 such as a DVD-R (Recordable) or the like by the optical pickup 9. The optical disc 10 is put on a turntable and rotated by a spindle motor 11. The spindle motor 11 is rotated at a constant linear velocity (CLV) by control of a servo unit 12.

The servo unit 12 forms various servo driving signals such as focusing signal, tracking signal, sled signal, and spindle signal on the basis of an operation instruction from the system controller 6 and outputs those signals to the spindle motor 11 and the optical pickup 9. Although not shown, a display, an operation switch, and the like are connected to the system controller 6. While converging a laser beam of a semiconductor laser onto the signal surface of the optical disc 10, the optical pickup 9 records the data onto tracks formed concentrically or a track formed spirally on the optical disc 10. The whole optical pickup 9 is moved by a sled mechanism.

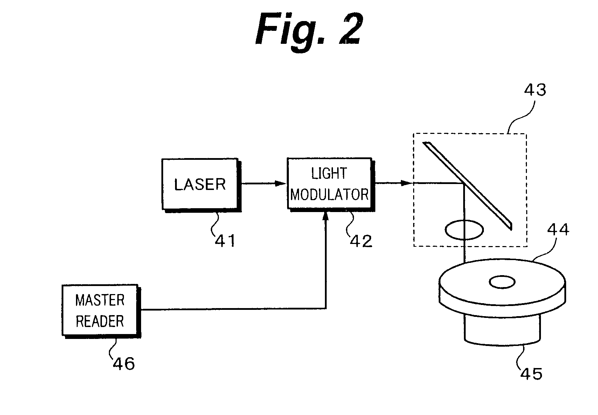

Fig. 2 shows a mastering apparatus to manufacture read only optical discs. The mastering apparatus has: a laser 41 as a gas laser such as Ar ion laser, He-Cd laser, Kr ion laser, or the like or a semiconductor laser; a light modulator 42 of an acousto-optical effect type or an electro-optical type for modulating a laser beam emitted from the laser 41; and an optical pickup 43 as recording means having an objective lens and the like for converging the laser beam which passed through the light modulator 42 and irradiating it onto a photoresist surface of a disc-shaped glass mother disc 44 coated with a photoresist as a photosensitive material.

The light modulator 42 modulates the laser beam from the laser 41 in accordance with the recording signal. The mastering apparatus forms a data-recorded master disc by irradiating the modulated laser beam onto the glass mother disc 44. A servo circuit (not shown) for controlling so that a distance between the optical pickup 43 and the glass mother disc 44 is held to be constant, controlling the tracking operation, and controlling the rotating operation of a spindle motor 45 is provided. The glass mother disc 44 is rotated by the spindle motor 45.

The recording signal from a master reader 46 is supplied to the light modulator 42. The master reader 46 reproduces the optical disc 10 on which the recording signal has been recorded by the recording apparatus described with reference to Fig. 1. The photoresist on the glass mother disc 44 is exposed by the modulated laser beam from the light modulator 42. A metal master is formed by developing the glass mother disc 44 recorded as mentioned above and executing an electroforming process to the disc 44. Subsequently, a mother disc is formed from the metal master. Moreover, a stamper is formed from the mother disc. A number of read only discs, for example, DVD-Video are manufactured by replication.

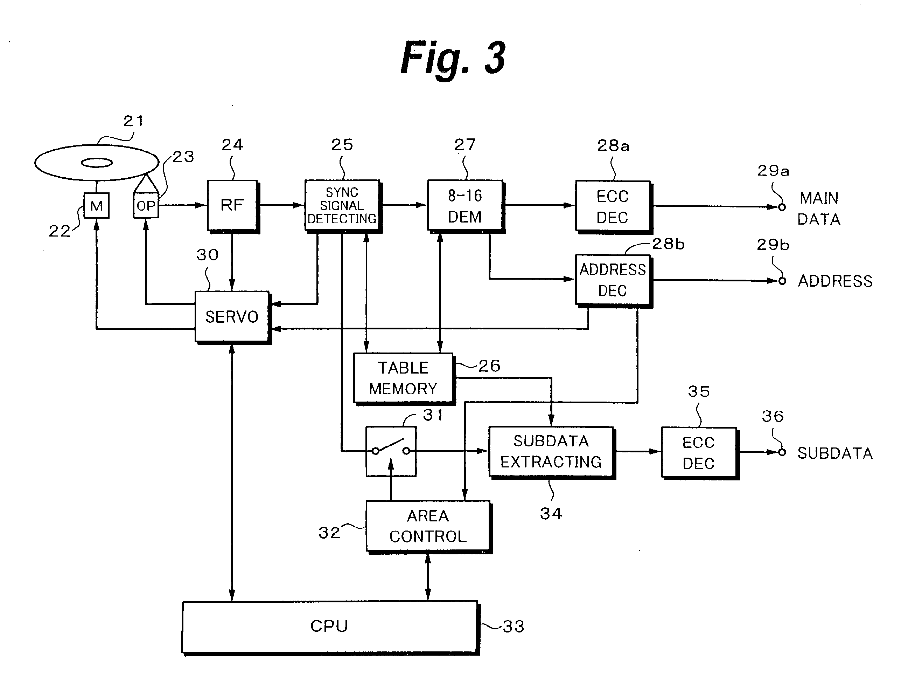

Fig. 3 shows an example of a construction of a reproducing apparatus for reproducing the optical disc formed by the foregoing mastering and replication. In Fig. 3, reference numeral 21 denotes a disc formed by the steps of the mastering and the replication; 22 a spindle motor for rotating the disc 21; and 23 an optical pickup for reproducing a signal recorded on the disc 21. The optical pickup 23 is constructed by: the optical system comprising a semiconductor laser, an objective lens, and the like for irradiating the laser beam onto the disc 21; a detector for receiving the return light from the disc 21; a focusing mechanism; a tracking mechanism; and the like. Further, the optical pickup 23 is fed in the radial direction of the disc 21 by a sled mechanism (not shown).

Output signals from, for example, a 4-split detector of the optical pickup 23 are supplied to an RF unit 24. The RF unit 24 forms a reproduction (RF) signal, a focusing error signal, and a tracking error signal by arithmetically operating the output signals from the detectors of the 4-split detector. The reproduction signal is supplied to a sync signal detecting unit 25. The detected frame sync signal, focusing error signal, and tracking error signal are supplied to a servo unit 30. The servo unit 30 controls the rotating operation of the spindle motor 22 on the basis of a reproduction clock of the RF signal and controls the focusing servo and tracking servo of the optical pickup 23.

An output of the sync signal detecting unit 25 is supplied to a demodulating unit 27 of the 8-16 modulation. A table memory 26 is provided in association with the sync signal detecting unit 25 and the demodulating unit 27 of the 8-16 modulation. Conversion tables for the frame sync signals which are used to form the frame sync signals upon recording and conversion tables for the main data which are used for the 8-16 modulation of the main data have been stored in the table memory 26. The sync signal detecting unit 25 detects the sync signal with reference to the conversion tables stored in the table memory 26. The demodulating unit 27 demodulates the main data with reference to the conversion tables stored in the table memory 26. That is, the code word of 16 channel bits is converted into the data symbol of 8 bits.

The reproduction main data is outputted from the 8-16 demodulating unit 27. The reproduction main data is supplied to a decoder 28a of the error correcting code ECC and error-corrected. The reproduction main data is taken out to an output terminal 29a. When the main data is the PCM audio data or the digital video data, an interpolating circuit is provided for an output of the ECC decoder 28a. Address information included in the main data is supplied to an address decoder 28b and an address is taken out to an output terminal 29b. The decoded address is used for display or the like.

The address information is supplied from the address decoder 28b to the servo unit 30 and an area control unit 32. A control signal from a system controller 33 is supplied to the servo unit 30. The system controller 33 is constructed by a microcomputer and controls the operation of the whole reproducing apparatus. Although not shown, operation buttons and a display unit are provided in association with the system controller 33. The system controller 33 controls the servo unit 30 in order to access a desired position on the disc 21. By controlling the servo unit 30 by the system controller 33, the seeking operation to reproduce information in a target address is enabled.

The reproduction frame sync signal is separated from the sync signal detecting unit 25 and supplied to a subdata extracting unit 34 through a switch 31. The on/off operation of the switch 31 is controlled by the area control unit 32. An instruction signal to instruct a predetermined interval is supplied from the system controller 33 to the area control unit 32 and a reproduction address is supplied from the address decoder 28b. When the predetermined interval is instructed from the system controller 33, the area control unit 32 monitors the reproduction address, detects the predetermined interval, and turns on the switch 31 only in the predetermined interval.

Since the switch 31 is turned on, the reproduction frame sync signal in the predetermined interval is supplied to the subdata extracting unit 34. The subdata extracting unit 34 extracts the subdata with reference to the tables regarding the frame sync signals in the table 26. Output data of the subdata extracting unit 34 is supplied to an ECC decoder 35 and errors of the subdata are corrected. The reproduced subdata is taken out to an output terminal 36.

The reproduction main data taken out to the output terminal 29a has been, for example, encrypted. The subdata is key information to decrypt the encryption. Actually, the reproduction main data has been encrypted by adding random numbers to the key data or the key information encrypted by block encryption such as DES or the like is obtained as subdata. Although not shown, the key data is decrypted and, further, the encryption of the main data is decrypted by the key data.

It is also possible to decide that the reproduced disc is the original disc by extracting the subdata. It is also possible to construct in such a manner that if it is determined that the reproduced disc is not the original disc (that is, it is a copy) since predetermined subdata cannot be extracted, a warning indicative of the copy is made or the system controller 33 inhibits the reproduction of the copy disc.

In the construction shown in Fig. 3, the reproducing apparatus of the construction excluding the switch 31, area control unit 32, subdata extracting unit 34, and ECC decoder 35 has substantially the same construction as that of the existing disc reproducing apparatus. Therefore, according to the invention, the optical disc 21 on which the subdata has been recorded can be reproduced by the existing reproducing apparatus without any trouble and can keep compatibility.

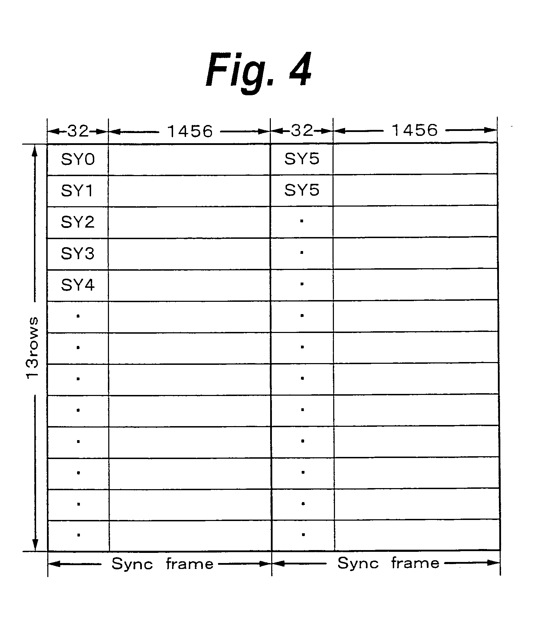

A construction of the data which is recorded on the disc will now be described with reference to Fig. 4. Fig. 4 shows a data array of one physical sector (hereinafter, properly referred to as one sector). User data of one sector consists of 13 rows x 182 bytes = 2366 bytes. The data of 182 bytes of each row is divided into two parts and the frame sync signal is added to each data of 91 bytes. Fig. 4 shows the number of channel bits and 91 bytes are equal to 91 × 16 = 1456 channel bits. Encoding of a Reed Solomon product code is executed to user data of 16 sectors and one block is constructed. Therefore, a data train of 13 rows × 16 = 208 rows exists in one block.

A construction of 32 + 1456 = 1488 channel bits is called one sync frame. Therefore, one sector consists of 2 × 13 = 26 sync frames. SY0, SY1, SY2, ... denote frame sync signals, respectively, and a plurality of kinds of frame sync signals are used.

Since each pattern of each kind of frame sync signal does not observe a rule of the run length conditions of the 8-16 modulation, it is a peculiar pattern which does not exist in the normal data. Four patterns are prepared for each kind of frame sync signal, thereby making it possible to cope with the modulation data just before or the DSV.

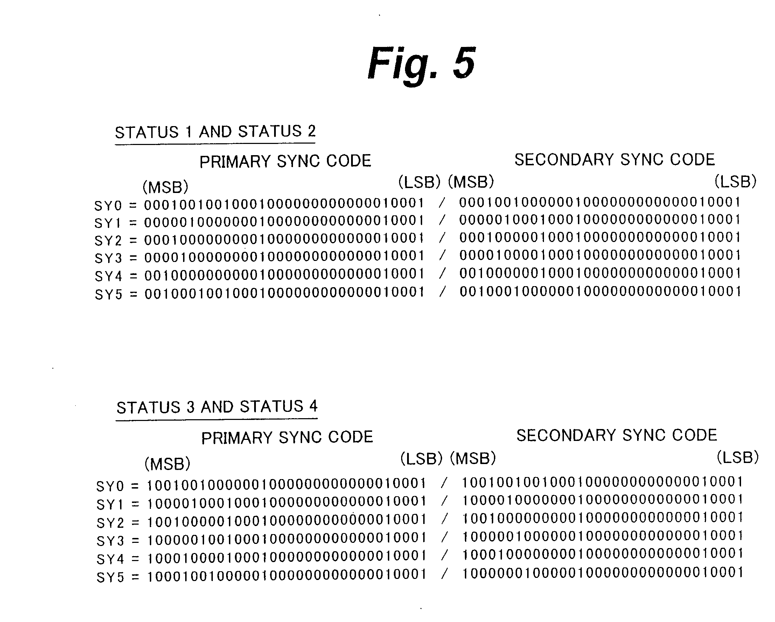

Fig. 5 shows an example of four patterns of sync codes respectively allocated to the frame sync signals. Fig. 5 shows patterns for a part of the frame sync signals. In 32 channel bits of the sync code, "1" denotes that the value is inverted (from the low level to the high level or vice versa). The four patterns are divided into the patterns which are selected in Status 1 and Status 2 and the patterns which are selected in Status 3 and Status 4 and, further, divided into a primary sync code and a secondary sync code. As will be explained hereinafter, each of Status 1 to Status 4 is specified as a next status when the main data just before is 8-16 modulated. The reason why two kinds of sync codes are prepared even in the case of the same frame sync signal is to enable the DSV to be converged to 0 when the signal is connected to the modulation data of the main data just before.

As for those four patterns, although there is a case where only two patterns can be selected in dependence on the data just before, at least two patterns can be selected. Therefore , one bit ("0" or "1") of the subdata can be allocated to the patterns of two sync codes which each of a plurality of kinds of frame sync signals can have. Its allocating method is predetermined. The allocating method is held in a secure environment and can be known only by a person who obtained permission of, for example. The Copyright Management Organization.

For example, it is assumed that the frame sync signal of one of the 13 rows of one sector is not used for the recording of the subdata (obviously, it can be also used) but the frame sync signals of the residual 12 rows are used for the recording of the subdata. As mentioned above, (13 × 16 = 208) rows exist in one block (16 sectors) and (12 × 16 = 192) rows among them are used and one bit or two bits can be recorded in each row. Therefore, the subdata of 192 or 384 bits can be recorded per block.

A simpler example of a method of recording the subdata will be described. As will be understood from the conversion tables of the frame sync signals shown in Fig. 5, as for a plurality of kinds of sync signals SY1, SY2, SY3, and SY4, the nth bit in any pattern is set to the same value. The first bit of each of the sync signals SY1 to SY4 is equal to "0" in the patterns of Status 1 and Status 2 and to "1" in the patterns of Status 3 and Status 4. The tenth bit of each of the sync signals SY1 to SY4 is equal to "0" in the patterns of Status 1 and Status 2 in the case of the primary sync code and to "1" in the case of the secondary sync code. Therefore, among the four patterns of the sync signals SY1 to SY4, it is possible to specify in such a manner that the first or tenth bit indicates the value of the subdata as it is. In this case, if the frame sync signals SY1 to SY4 can be detected, the subdata can be extracted.

According to the method of recording the subdata as mentioned above, when the frame sync signals of 12 rows excluding the first row are used to record the subdata, the subdata of 192 bits can be recorded per block. According to this method, if the subdata is embedded only in the nth bit and only the nth bit is observed, the subdata can be extracted and a construction of the subdata extracting unit can be simplified.

A correspondence relation between the subdata and the patterns of the sync signals can be made different in dependence on the kind of recording medium. For example, the kinds of sync signals which are used to record the subdata are made different in dependence on the kind of recording medium. By making the recording method of the subdata of the read only disc and that of the recordable disc different, even if the data is copied as it is from the read only disc to the recordable disc, the subdata cannot be extracted. Therefore, the security of the subdata can be further raised, and the copy protection can be enhanced. Further, the correspondence relation between the subdata and the patterns in the case of recording onto the recording medium and that in the case of communicating through a network can be also made different.

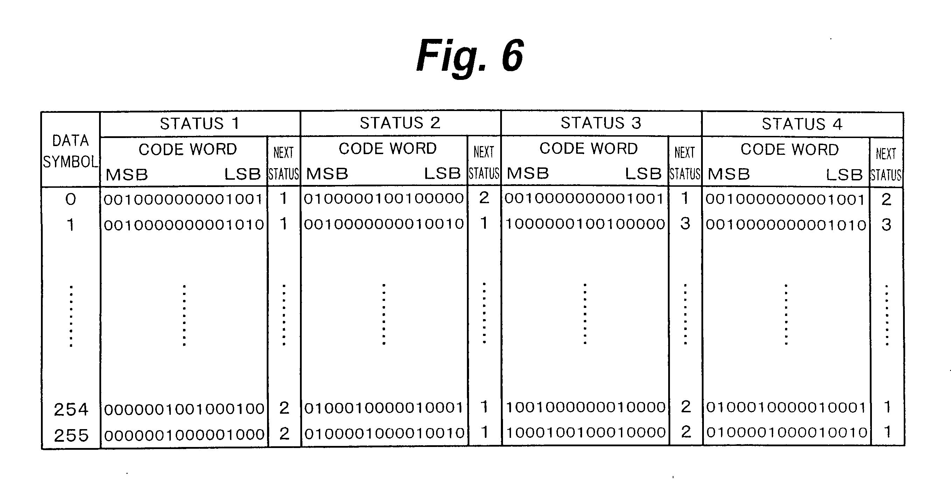

Fig. 6 shows conversion tables for the main data and four kinds of tables are prepared. Each table is selected in accordance with State 1 to State 4 in this instance. In each table, Status (next status) after the code word is selected has been specified.

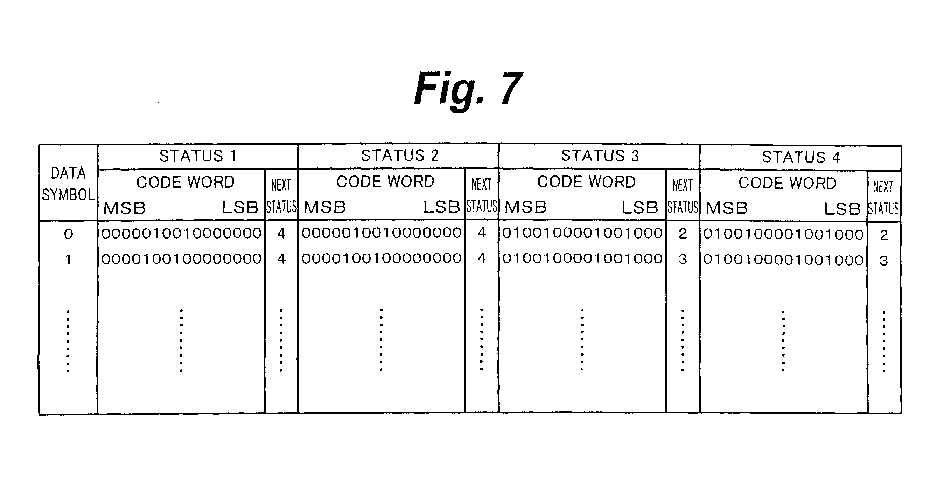

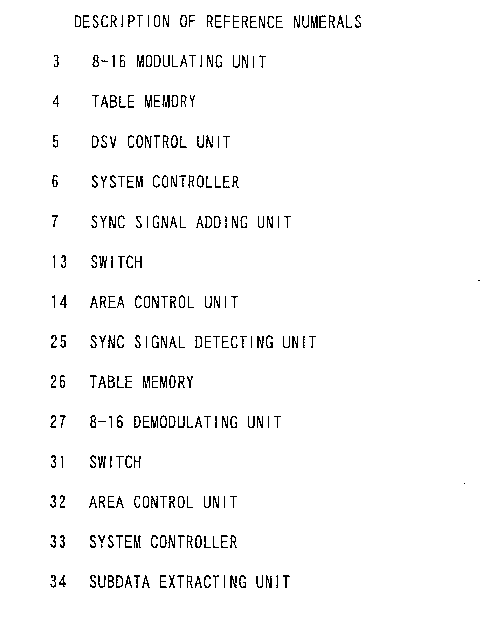

Fig. 6 shows a main conversion table and an auxiliary table shown in Fig. 7 other than the main conversion table is prepared. The auxiliary table also comprises four code conversion tables. The auxiliary table is used to set the DSV to a value less than a predetermined value when an absolute value of the DSV is equal to or larger than the predetermined value if the 8-16 conversion is executed by using the main data shown in Fig. 6. The main conversion table is applied to all data symbols of 0 to 255 and the auxiliary table is prepared for a part of the data symbols, for example, only for the data symbols of 0 to 127.

The invention is not limited to the embodiment and the like of the invention mentioned above but many modifications and applications are possible within the scope without departing from the spirit of the invention. For example, the predetermined interval in which the sync signal is inserted is not limited to the frame unit but can be set to a sector unit or a block unit or a value of n time or l/n time (n is an integer of 2 or more) of such a unit. The invention can be also applied to an optical disc of multisession having a ROM area and a recordable area. As information to be recorded onto the optical disc, various data such as audio data, video data, still image data, character data, computer graphics data, game software, computer program, and the like can be given. Further, the invention is not limited to the disc-shaped data recording medium but can be also applied to a card-shaped data recording medium. The invention can be also applied to a magnetic recording medium.

The invention is not limited to the recording/reproduction of the data recording medium but can be also applied to the case of transmitting/receiving the data without using the data recording medium. In the construction of the recording apparatus in Fig. 1, it is possible to use such a construction that a transmitting circuit is provided in place of the recording circuit and the recording data is modulated by a modulating system suitable for the communication and transmitted from a transmitting antenna or sent to a network such as Internet or the like. In the construction of the reproducing apparatus in Fig. 3, a receiving antenna or a unit for connecting to the network is provided in place of the reproducing unit of the optical disc 21 and the reception data can be processed in a manner similar to the reproduction data.

As will be obviously understood from the above description, according to the invention, the subdata other than the main data can be recorded/reproduced (or transmitted/received) without exercising any influence on the construction of the normal reproducing system and the signal processes. Therefore, although the data recording medium to which the invention is applied cannot extract the subdata, it can be reproduced by the existing reproducing apparatus. The subdata recorded by the invention cannot be extracted by the existing reproducing apparatus and the data for the security and copy protection can be applied as subdata. Further, unlike the method of controlling the selection of the conversion table for the modulation of the main data or the like, according to the invention, since no influence is exercised on the modulation of the main data or the like, there is such an advantage that a degree of freedom at the time of realizing the recording of the subdata is higher.

## Claims

1. A data recording method comprising the steps of:
selecting predetermined sync signal patterns from patterns of a plurality of sync signals on the basis of contents of subdata other than main data; and
inserting the selected sync signal patterns at every predetermined interval of saidmain data and recording.

2. A data recording method according to claim 1, wherein
said selected sync signal patterns are inserted every frame unit, sector unit, block unit, or unit which is n times or 1/n time (n is an integer of 2 or more) of said unit.

3. A data recording method according to claim 1, wherein
a predetermined bit or a plurality of bits included in each of the patterns of said selected sync signals is/are recorded in correspondence to at least one bit in information of said subdata.

4. A data recording method according to claim 1, wherein
saidmain data is modulated by a digital modulating system for selecting one of a plurality of kinds of modulation tables.

5. A data recording method according to claim 4, wherein
said digital modulating system controls a DSV by switching code conversion tables provided every data status on the basis of a status of main data recorded just before.

6. A data recording method according to claim 1, wherein
said subdata is information regarding copy protection or security of said main data or as personal information.

7. A data recording method according to claim 1, wherein
a control method of the selection of the patterns of said sync signals differs in dependence on a kind of data recording medium.

8. A data recording apparatus comprising:
storing means for storing sync signals of a plurality of patterns;
recording means for recording data; and
control means for allowing predetermined sync signal patterns to be selected from the patterns of said plurality of sync signals stored in said storing means on the basis of contents of additional data added to the recording data and allowing the selected sync signal patterns to be inserted at every predetermined interval of said recording data and recorded.

9. A data recording medium on which predetermined sync signal patterns among patterns of a plurality of sync signals have been inserted at every predetermined interval of recording data on the basis of contents of additional data added to said recording data and have been recorded.

10. A data recording medium according to claim 9, wherein
said predetermined interval is a frame unit, a sector unit, a block unit, or a unit which is n times or 1/n time (n is an integer of 2 or more) of said unit.

11. A data recording medium according to claim 9, wherein
a predetermined bit or a plurality of bits included in each of the patterns of said selected sync signals is/are made to correspond to at least one bit in information of said subdata.

12. A data recording medium according to claim 9, wherein
said main data is modulated by a digital modulating system for selecting one of a plurality of kinds of modulation tables.

13. A data recording medium according to claim 12, wherein
said digital modulating system controls a DSV by switching code conversion tables provided every data status on the basis of a status of main data recorded just before.

14. A data recording medium according to claim 9, wherein
said subdata is information regarding copy protection or security of said main data or as personal information.

15. A data recording medium according to claim 9, wherein
a control method of the selection of the patterns of said sync signals differs in dependence on a kind of data recording medium.

16. A data recording medium according to claim 15, wherein
the kind of said data recording medium is a read only type or a writable type.

17. A data reproducing method comprising the steps of:
reproducing a data recording medium on which predetermined sync signal patterns among patterns of a plurality of sync signals have been inserted at every predetermined interval of recording data on the basis of contents of additional data added to said recording data and have been recorded;
accessing said predetermined interval;
detecting the sync signal in said predetermined interval; and
identifying the pattern of said detected sync signal, thereby allowing said additional data to be reproduced.

18. A data reproducing method according to claim 17, wherein
one bit or a plurality of bits included in each of said detected sync signal patterns is/are identified.

19. A data reproducing apparatus comprising:
reproducing means for reproducing a data recording medium on which predetermined sync signal patterns among patterns of a plurality of sync signals have been inserted at every predetermined interval of recording data on the basis of contents of additional data added to said recording data and have been recorded; and
control means for allowing said reproducing means to access said predetermined interval, detecting the sync signal in said predetermined interval, and
identifying the pattern of said detected sync signal, thereby allowing said additional data to be reproduced.

20. A data reproducing apparatus according to claim 19, wherein
one bit or a plurality of bits included in each of said detected sync signal patterns is/are identified.

21. A data transmitting method comprising the steps of:
selecting predetermined sync signal patterns from patterns of a plurality of sync signals on the basis of contents of additional data added to transmission data; and
inserting the selected sync signal patterns at every predetermined interval of said recording data and transmitting.

22. A data transmitting apparatus comprising:
transmitting means for inserting sync signals at every predetermined interval of transmission data and transmitting; and
control means for allowing predetermined sync signal patterns to be selected from patterns of a plurality of sync signals on the basis of contents of additional data added to the data to be transmitted and allowing the selected sync signal patterns to be transmitted by said transmitting means.

23. A data receiving method comprising the steps of:
receiving data in which sync signal patterns are arranged at every predetermined interval of transmission data;
detecting the pattern of said sync signal from the received data; and
forming additional data of the transmission data on the basis of said detected sync signal.

24. A data receiving apparatus comprising:
receiving means for receiving data in which sync signal patterns are arranged at every predetermined interval of the data; and
control means for detecting the pattern of said sync signal from the received data and allowing additional data of the data received by said receiving means to be formed on the basis of the detected sync signal.
